# EUROPEAN PATENT APPLICATION

(11) **EP 0 745 323 A1**
(43) Date of publication of application: **04.12.1996**
(21) Application number: 95308632.9
(22) Date of filing: 30.11.1995
(51) Int. Cl.: A01M 25/00

(54) **Bait station with elevated rodenticide support**

(30) Priority: 02.06.1995 US 459731
(71) Applicant: BELL LABORATORIES INC., Madison, Wisconsin 53704 (US)
(72) Inventor: Johnson, Daniel C., Madison, Wisconsin 53716 (US); Spragins, Cisse W., Exning, New Market, Suffolk CB8 7HA (GB)
(74) Representative: Lerwill, John

(57) **Abstract**

A bait station (20) has a base (22) with upwardly extending sidewalls (26) and a hinged lid (32). A passageway for rodents such as rats is formed within the interior volume of the covered base by two converging barriers (54), the ends of which are spaced from one another to allow access to a rodent feeding trough. Each barrier (54) is formed by a segment (56) which extends upwardly from the base floor and a segment (58) which extends downwardly from the lid. Upwardly opening slots (112) are formed on the base barrier segments (56). A bait support rod (21) extends between the two base barrier segments (56) and is engaged in the slots (112). Bait units are supported on the rod (21) generally above the rodent feeding trough. The support rod (21) has a downwardly extending loop which engages between one base barrier segment (56) and a wall of the feeding trough to restrict side-to-side movement of the rod (21).

## Description

### FIELD OF THE INVENTION

The present invention relates to vermin exterminating apparatus in general, and to dispensers of rodenticide in particular.

### BACKGROUND OF THE INVENTION

Rodents such as rats are not only a nuisance, but can be extremely costly wherever food is stored or transported, consuming vast amounts of grain and other foodstuffs. Furthermore, rats spread disease, and can be dangerous to domestic animals and humans. Many modem rodenticides are slow-acting chemical substances which are dispensed with food which is attractive to rodents. Preferably the rodenticides do not cause immediate rodent death, hence avoiding evidence at the rodenticide dispensing area of the lethality of the apparently desirable rodent bait. To maximize rodenticide effectiveness at a particular infested region, the bait and rodenticide mixture is dispensed within a container which may be fixed in place. These dispensers or bait stations enclose the bait, keeping it dry and preventing the displacement of the rodenticide.

Bait stations must make the bait easily accessible to rodents, but at the same time must restrict access to the rodenticide by domestic animals and children. For durability and low cost, bait stations have advantageously been formed as unitary injection-molded plastic units, with a plastic lid joined by an integrally molded hinge to a plastic base. Loose bait pellets and solid bait units of various configuration have been employed with plastic bait station. However, it is desireable to limit contact with the bait by children and pets.

Bait stations are only effective in controlling rodent populations to the extent that rodents are voluntarily enticed to enter the station and consume the poisoned bait within. Hence, bait stations which will present the bait in a convenient and readily accessible fashion, and which will preserve the edibility and flavor of the bait are highly desireable. Thus there exists a need for presenting solid bait to rodents in an easily accessible fashion, and in a manner which prevents the bait from becoming soiled with rodent wastes and dirt.

### SUMMARY OF THE INVENTION

The bait station of this invention retains rodent bait in block form at a conveniently accessible level to rodents even as the block is partially consumed. The bait station has a base with upwardly extending sidewalls. A plastic lid is integrally hinged to the base and closes upon the base and is secured by plastic prongs against unauthorized opening. A passageway for pests, in particular rodents such as rats, is formed within the interior volume of the covered base by two converging barriers, the ends of which are spaced from one another to allow access to a rodent feeding trough. Each barrier is comprised of a segment which is integrally formed with the base and extends upwardly from the base floor and a lid barrier segment which protrudes from the lid. Upwardly opening slots are formed on the base barrier segments. A bait support rod extends between the two base barrier segments and is engaged in the slots. One large bait unit, or one or more smaller bait units, are supported on the rod generally above the rodent feeding trough. The support rod has a downwardly extending loop which engages between one base barrier segment and a wall of the feeding trough to restrict side-to-side movement of the rod. When the lid is closed on the base, the rod, and thus the bait units, are prevented from vertical movement.

It is an object of the present invention to provide a rodent bait dispenser which supports solid bait units for ready access by rodents even as portions of the bait are consumed.

It is a further object of the present invention to provide a rodent bait station which presents bait units at an elevated level to targeted rodents.

It is an additional object of the present invention to provide a rodent bait station which restricts dislocation of bait units maintained therein.

It is also an object of the present invention to provide a rodent bait station which retains an enclosed bait unit from soiling with ground level contaminants.

It is another object of the present invention to provide a rodent bait station which will accept solid and extruded bait units of a variety of configurations.

Further objects, features and advantages of the invention will be apparent from the following detailed description when taken in conjunction with the accompanying drawings.

### BRIEF DESCRIPTION OF THE DRAWINGS

FIG. 1 is an isometric view of the bait station of this invention with the lid open.

FIG. 2 is a fragmentary isometric view of the bait station of FIG. 1 with the bait support removed and with the lid in a partially closed configuration.

FIG. 3 is a fragmentary isometric view of the bait station of FIG. 2 with the bait support and bait in position and with the lid closed.

FIG. 4 is a partially broken away, top plan view of the bait station of FIG. 1.

FIG. 5 is a cross-sectional view of the bait station of FIG. 4 taken along section line 5-5.

FIG. 6 is a top plan view of the bait support rod of the bait station of FIG. 1.

FIG. 7 is a front elevational view of the bait support rod of FIG. 6

### DESCRIPTION OF THE PREFERRED EMBODIMENT

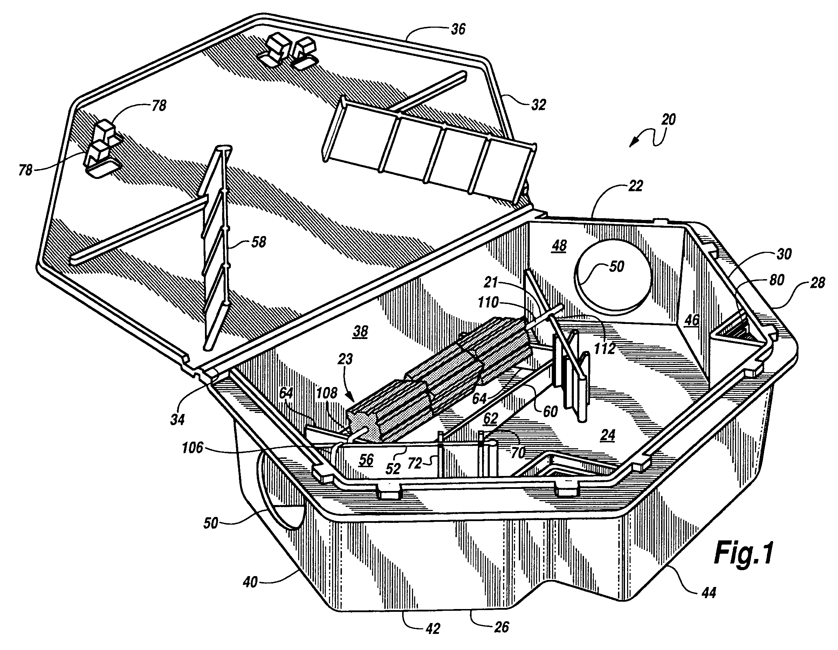

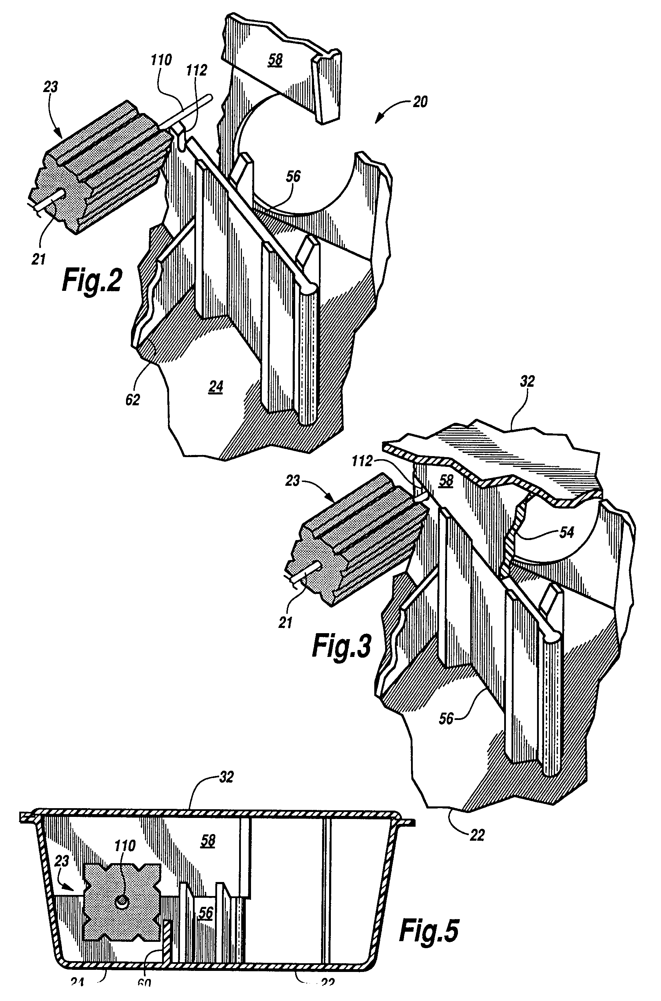

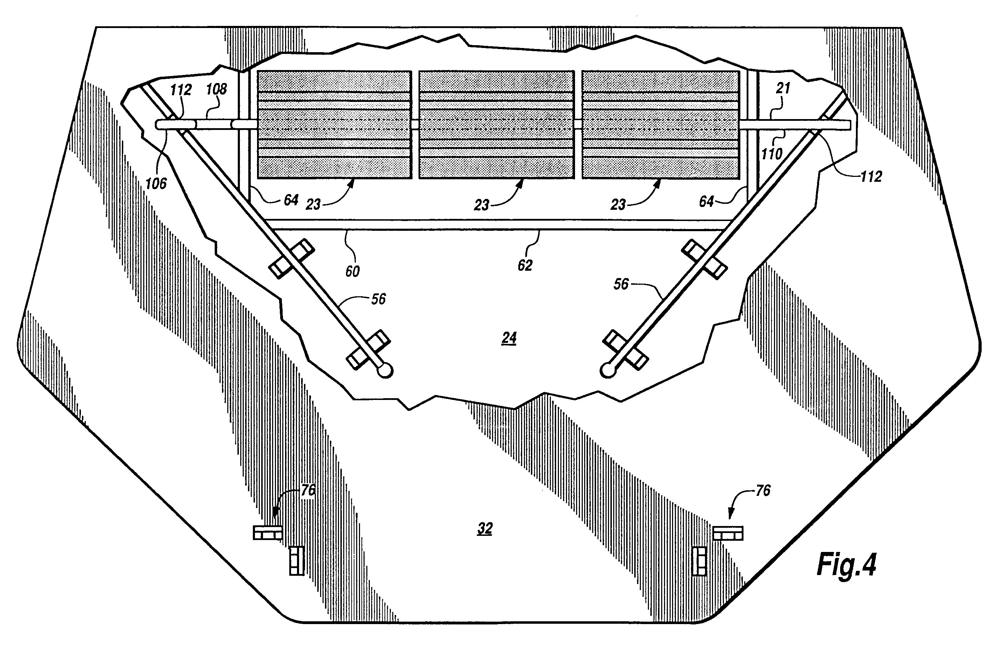

Referring more particularly to FIGS. 1-7, wherein like numbers refer to similar parts, a rodent bait station 20 is shown in an open configuration in FIG. 1. A bait support rod 21 positions and supports a plurality of solid bait units 23 within the bait station 20 for access by rodents. The bait station is preferably formed of injection molded plastic and has an upwardly opening base 22 which has a floor 24 which rests on a surface and a sidewall 26 which extends upwardly from the floor. A flange 28 extends outwardly from the sidewall 26 below the level of an upwardly extending rim 30. A lid 32 extends from the base 22 along an integral plastic hinge 34 and is pivotable between an open configuration, shown in FIG. 1, and a closed position, shown in FIGS. 4 and 5. The lid has a downwardly extending skirt 36 which engages against the base flange 28 when closed to form a seal against entry of moisture and debris.

The base has a hinge sidewall segment 38 which is positioned beneath the hinge 34, and five narrower side wall segments 40, 42, 44, 46, 48 which form the side wall 26. The two sidewall segments 40, 48, which are adjacent to the hinge sidewall segment 38 have circular openings 50 formed therein to permit the entrance and egress of rodents from the interior of the bait station 20. The side wall segments 42, 46 which extend from the segments 40, 48, with the rodent openings extend at approximately right angles to one another, and are connected by the side wail segment 44. The right angle segments 42, 46 allow the bait station 20 to be placed in a corner of a room where two walls meet.

A passageway 52 for rodents is defined between the sidewall segments 42, 44, 46 and two composite barriers 54. Each barrier 54 is comprised of a base barrier segment 56 and a lid barrier segment 58. Each base barrier segment 56 extends upwardly substantially perpendicular to the base floor 24 to a height below the level of the base rim 30. Each lid barrier segment 58 extends downwardly from the lid 32 and mates with a base barrier segment 56 to form a barrier 54 which is resistant to penetration by rodents. In a bait station which is about three inches high, the base barrier segment 56 and the lid barrier segment 58 would both be about one and a half inches high.

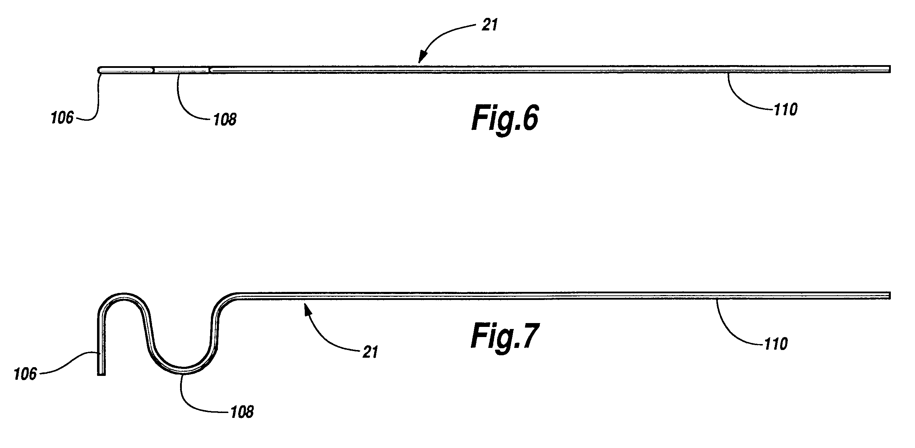

The bait support rod 21, best shown in FIGS. 6 and 7, is a steel rod, approximately one-eighth of an inch in diameter, which is bent to have a hook 106 and a downwardly extending loop 108 on one end of a straight segment 110. The hook 106 passes over one base barrier segment 56, and the straight segment 110 passes over the other barrier segment, as shown in FIG. 4. Slots 112 are formed into the base barrier segments 56 to receive the support rod so that the engaged support rod 21 does not extend above the level of the barrier segments. Extruded bait units 23 having cylindrical axial holes may be placed on the straight segment 110 of the rod 21. The rod 21 has a straight segment to allow placement of a bait unit with a relatively small diameter axial hole on the rod 21.

The rod 21 supports the bait units over a rodent feeding trough 60 located between the barriers 54. The trough 60 has a front wall 62 and two side walls 64 which are approximately one quarter the height of the base 22. The straight segment 110 of the support rod is above the level of the trough front wall 62 and trough side walls 64, in a preferred embodiment, by about one-half inch. The rodenticide, when supported on the rod 21, will be fixed within the bait station 20, and hence the chances that the bait will be dislodged from the bait station by animal action or by disturbance of the station is greatly reduced. Furthermore, the bait units are elevated at least partially above the trough 60, reducing any interference to ready consumption which the trough front wall 62 might present. Furthermore, an elevated bait unit 23 will be less likely to become contaminated by rodent waste, water, dirt, or any other foreign matter which may gather at the base of the trough. A dry uncontaminated bait unit 23 offers the best chance of attracting the attention of a rodent and of then being consumed. The trough 60 serves to retain crumbs of rodenticide and fragments of the bait units once they are no longer intact enough to be supported on the rod 21. The trough 60 is accessible to rodents for feeding, but is not directly in the path of the rodent passageway 52, which prevents the rodenticide from being tracked outside of the bait station 20. Retention of unconsumed rodenticide within the bait station 20 is desirable to keep it out of contact with nontargeted animals.

The support rod 21 also allows the rodent to rotate the bait unit 23 about the straight section 110 of the rod, thereby enabling the rodent to position the bait unit 23 to obtain the best configuration for gnawing.

The support rod 21 does not engage the sidewalls of the bait station base, and is retained in place within the bait station 20 by downwardly extending loop 108. The loop 108, as shown in FIG. 4, is dimensioned to extend downward from the level of the straight segment 110 into the region between a base barrier segment 56 and a trough side wall 64. The loop 108, and thus the entire rod 21, is prevented from lateral motion by alternatively engaging against one or the other of the base barrier segment 56 or the trough side wall 64.

To bait the station 20, it is only necessary to open the lid, remove the support rod 21, place one or more bait units 23 on the rod, reposition it on the base barrier segments, and close the lid. The split barrier segments allow the rod 21 to be fully constrained when the lid is closed on the base, but to be easily accessible when the lid is open.

As shown in FIGS. 2 and 3, each base barrier segment 56 has two sets of prongs 70, 72 which restrict the lid barrier segments 58 from being displaced from alignment with the base barrier segments 56.

To keep rodenticides out of reach of unauthorized persons, in particular children, the bait station 20 has two locks 76. Each lock 76 is comprised of two barbed protrusions 78 formed on the lid 32 which engage with downwardly facing ledges 80 formed on the base 22.

It should be noted that the bait station of this invention may have a different exterior configuration than the illustrated embodiment, and bait units of differing cross-section may be employed.

It is understood that the invention is not limited to the particular construction and arrangement of parts herein illustrated and described, but embraces such modified forms thereof as come within the scope of the following claims.

## Claims

1. A bait station for containing rodenticide, the bait station comprising:
a) a base having a floor and upwardly extending sidewalls, and having portions which define a rodent feeding trough;
b) a lid joined to the base, wherein the lid selectively covers and uncovers the base;
c) two base interior barrier segments which extend upwardly from the base floor;
d) a bait support rod which extends between the two barrier segments across the rodent bait dispensing trough, wherein the rod provides means for supporting a rodent bait unit with respect to the rodent feeding trough to thereby limit the displacement of a bait unit within the bait station; and
e) at least one lid barrier segment which extends downwardly from the lid to engage the support rod between the lid barrier segment and at least one base barrier segment.

2. The station of Claim 1 wherein the rodent bait dispensing trough has upwardly extending side walls, and wherein the rod is spaced above the level of the trough side walls.

3. The station of Claim 2 wherein the rod has a downwardly extending loop which extends between an interior barrier segment and a trough side wall to restrict the side-to-side displacement of the rodent bait unit.

4. The station of Claim 1 wherein the rod has a hook which engages with a base barrier wall, and a straight segment over which bait units with axial holes may be placed.

5. A bait dispensing assembly comprising:
a) a bait station having a lid, a base with a floor and upwardly extending sidewalls, and two base interior barrier segments which extend upwardly from the base; and
b) a bait support rod which extends between the two bait station barrier segments across the rodent feeding trough, wherein the rod has means for restricting the side to side motion of the rod with respect to the barrier segments, and the rod supports a rodent bait unit with respect to the rodent feeding trough to thereby limit the displacement of a bait unit within the bait station, and wherein the bait station has means formed on the lid and the base which interact to hold the rod in place on the interior barrier segments when the lid is closed on the base.

6. A rodenticide dispensing station comprising:
a) a base having a floor and upwardly extending sidewalls;
b) a lid joined to the base, the lid having two downwardly protruding members, wherein the lid selectively covers and uncovers the base;
c) two interior barrier segment which extend upwardly from the base floor to engage the lid downwardly protruding members;
d) a rod which extends between the two interior barrier segments with the station base, the rod having a hook which extends downward on one side of a barrier segment, and a straight segment which extends over the other barrier segment; and
e) a rodent bait unit having portions defining an axial hole, the rod extending through the bait unit to thereby connect the bait unit to the station.

7. The station of Claim 6 further comprising a rodent bait dispensing trough positioned beneath the rod and having upwardly extending side walls, and wherein the rod is spaced above the level of the trough side walls.

8. The station of Claim 7 wherein the rod has a downwardly extending loop which extends between an interior barrier segment and a trough side wall to restrict the side-to-side displacement of the rodent bait unit.
